# EUROPEAN PATENT SPECIFICATION

(11) **EP 0 980 821 B1**
(45) Date of publication and mention of the grant of the patent: **06.10.2010**
(21) Application number: 99116299.1
(22) Date of filing: 18.08.1999
(51) Int. Cl.: B62M 23/02, B62M 11/16, B62M 7/12

(54) **Motor drive unit for electric motor-operated vehicle**
Antriebseinheit für Fahrzeuge mit elektrischem Antrieb
Unité de propulsion pour un véhicule avec moteur électrique

(30) Priority: 18.08.1998 JP 23151698
(43) Date of publication of application: 23.02.2000
(73) Proprietor: Yamaha Hatsudoki Kabushiki Kaisha, Iwata-shi, Shizuoka-ken (JP)
(72) Inventor: Nakanosono, Haruhiko, Iwata-shi, Shizuoka-ken (JP)
(74) Representative: Grünecker, Kinkeldey, Stockmair & Schwanhäusser Anwaltssozietät

(56) References cited:
- EP-A- 0 755 855
- EP-A- 0 784 008
- US-A- 5 272 938
- US-A- 5 691 584

## Description

This invention relates to a motor drive unit for an electric motor-operated vehicle according to the preamble of independent claim 1. Such a motor drive unit can be taken from the prior art document EP 0 755 855 A2 or from US 4,346,777 A1.

Said prior art document EP 0 755 855 A2 teaches a driving device for a bicycle with a specific planetary transmission arrangement set side-by-side with an electric motor. Said motor drive unit comprises an electric motor and a hub shaft, wherein a central hole is formed in the center of a motor output shaft and the hub shaft is inserted into said central hole. Thus, said hub shaft extends through the entire assembly. Furthermore, a pinion gear is provided on the output shaft and is in mesh with an intermediate gear. Said intermediate gear functions as a planetary gear of a planetary gear mechanism constituted by the pinion as the sun gear, said planetary gear and a ring gear. In further particular, the pinion is formed around the outer circumference of the tip end of a motor output shaft and the intermediate gear engages with said pinion. Three or four intermediate gears are installed in positions located at equal angles around the circumference of the pinion. Both ends of the shafts of each intermediate gear are rotatably supported on a fixed arm and said fixed arm is fastened to the hub shaft by a nut. Said hub shaft extends through the drive unit and is supported on a vehicle frame. Said fixed arm has an annular shape and square teeth are formed on the inner circumferential surface of the fixed arm. Said square teeth engage with square teeth formed on the hub shaft, so that the fixed arm is non-rotatably fastened to the hub shaft. In order to cover the respective side of the hub, a cap member is attached to said fixed arm. Said cap member extends in radial direction and is provided with an axial bent part overlapping with an axial end of the hub. A space is provided between said end of the cap member and said end of the hub. A plate-shaped cover means is provided which is fixed to said planetary carrier and the hub shaft. Said cover means is completely restricted to cover a side opening of the hub, wherein only a small rim extends in axially direction of the entire unit.

An example of conventional motor drive unit for an electric motor-operated bicycle with an electric motor disposed in the vicinity of the wheel shaft is disclosed in an official gazette, a laid-open Japanese patent application No. Hei-9-39872. The motor drive unit described in the gazette is constituted that an electric motor and a planetary gear transmission are disposed side by side in the vehicle width direction and supported coaxially on a wheel shaft fixed to the vehicle body frame so that the rotation of the output shaft of the electric motor is reduced with the planetary gear transmission and transmitted to the hub. The hub is shaped to cover around the planetary gear mechanism and supported for rotation on the wheel shaft.

The electric motor has a housing secured to the vehicle body frame and an output shaft which projects toward the planetary gear transmission and which is formed in a tube shape for the wheel shaft to pass through.

The planetary gear transmission is constituted with two planetary gear transmissions disposed in series, side by side in the vehicle width direction. That is to say, it is constituted that when the sun gear of the planetary gear mechanism located on the electric motor side rotates together with the output shaft of the electric motor, the rotation of the sun gear is transmitted at a reduced speed to the outer circumferential gear of the other planetary gear mechanism. The hub is connected to the outer circumferential gear so as to be rotated by the power of the electric motor.

However, in the conventional motor drive unit for the electric motor-operated bicycle, there are problems that the outside diameter of the entire motor drive unit increases and that its weight increases as the electric motor and the planetary gear mechanism are disposed around a single wheel shaft.

This is because the rotor of the electric motor, the output shaft, and the sun gear of the planetary gear transmission have to be formed with a diameter that permits the through passage of the wheel shaft, namely with too large a diameter for the electric motor output, and accordingly the diameters of the motor stator, the planetary gear of the planetary gear transmission, and the outer circumferential gear increase.

Another problem is large noises produced with the meshing parts because the planetary transmission has many meshing parts as the two planetary gear mechanisms are disposed side by side to provide two stages in the speed reduction.

Prior art document EP 0 784 008 A2 discloses a motor drive unit for an electric motor-operated bicycle having an electric motor with a rotor and a stator and a planetary transmission means which are disposed inside a hub. Said hub is supported for rotation on the same axial line by a wheel shaft of a wheel. The electric motor is disposed on one vehicle width direction end of the inside of the hub, the planetary transmission means is disposed on the other end and the rotor of the electric motor is coupled to a sun member of the planetary transmission means. A carrier is provided for supporting a planetary member of the planetary transmission means is connected with the wheel shaft. Said motor drive unit comprises the electric motor and the planetary transmission means being arranged side-by-side with regard to the wheel shaft. The stator of said motor is fixed to the wheel shaft and the rotor surrounds said stator and is integrally formed with the sun gear of the planetary transmission means. The carrier of the planetary transmission means is fixed on the wheel shaft. The motor and the transmission means are accommodated within the hub of the wheel. The wheel shaft extends through the transmission means and the stator of the related motor, wherein the hub and the rotor of the motor are rotatably supported on said wheel shaft.

Further prior art US 5,272,938 teaches a flat rim type motor drive mechanism for a bicycle. Said drive mechanism comprises an electric motor with a rotor, a stator, and a housing means accommodating said rotor and the stator. The rotor is connected with a central element of the transmission means. A hollow central shaft extends through the entire mechanism and serves as a wheel shaft. The rotor as well as the further housing elements are rotatably supported on said central wheel shaft.

The further prior art document US 5,691,584 teaches a wheel motor for vehicles, wherein a wheel shaft extends through the related hub in width direction therefrom. The further elements are rotatably supported on said wheel shaft.

The further prior art document US 4,346,777 teaches an electric drive unit for a bicycle, having a motor arranged within a hub, wherein said motor comprises a rotor carried by a pin, and stator means constituting a motor housing. An electromagnetic clutch is provided to connect and disconnect a pinion with said pin wherein said pinion further engages with a gear means being rotatably supported on the motor housing by means of a further pin. That gear means engages with a toothed annulus of the hub.

It is an objective of the present invention to provide a motor drive unit as indicated above facilitating the reduction of size, the weight, and the noise level and simultaneously the enhancement of longevity.

According to the present invention said objective is solved by a motor drive unit having the features of independent claim 1. Preferred embodiments are laid down in the dependent claims.

In order to further enhance the motor drive unit, it is advantageous when the sun member is associated with a planetary member moving an outer circumferential member for rotating the hub.

According to another embodiment, in the motor drive unit for an electric motor-operated bicycle, the electric motor is disposed on one end, in the vehicle width direction, of the inside of the hub; the planetary transmission is disposed on the other end so as to transmit the rotation of the rotor of the electric motor from the sun member through the planetary member and an outer circumferential member to the hub. Further, it is possible that the wheel shaft is constituted with an assembly unit made by interconnecting a motor housing for the electric motor and a carrier for supporting the planetary member of the planetary transmission.

According to one embodiment, since the electric motor, the planetary transmission, and the hub can be supported without using a single shaft that passes through the electric motor and the planetary transmission in the vehicle width direction, components that are located in the axial part of the electric motor and the planetary transmission can be formed with sufficient dimensions required for transmitting the output of the electric motor without sacrificing the supporting rigidity.

Another advantage is that, since the sun member of the planetary transmission which receives rotation transmitted from the electric motor rotor may be made with a small diameter, it is possible to provide a large speed reduction ratio of the planetary transmission without increasing its external dimensions. As a result, an electric motor of a high revolution type with a small torque, namely a small-sized electric motor may be used.

Still another advantage is that, since the motor housing which constitutes part of the wheel shaft can be formed in a shape that increases its strength, the motor housing may be formed with aluminium alloy for example, and the wheel shaft may be reduced in weight without reducing its rigidity.

The motor drive unit for an electric motor-operated bicycle according to another embodiment of the invention is based on the motor drive unit for an electric motor-operated bicycle of the invention described above, in which the electric motor is a brush-less dc motor with its rotor located in the axial center of its stator, the stator is fixed to the inside circumferential surface of the motor housing, and the rotor is supported for rotation on the motor housing.

Accordingly, the diameter and the weight of the electric motor can be reduced in comparison with a constitution in which the wheel shaft is passed through the axial part of the electric motor. As a result, it is possible not only to make the motor housing in a small diameter but also to reduce the thickness of the motor housing wall because a smaller strength is required to support the rotor.

The motor drive unit for an electric motor-operated bicycle according to a further embodiment is based on the motor drive unit for an electric motor-operated bicycle as mentioned above, in which the planetary transmission comprises a planetary roller transmission and a planetary gear transmission disposed side by side in the vehicle width direction, the sun roller of the planetary roller transmission is connected to the rotor of the electric motor, the carrier for supporting the planetary roller is connected to the sun gear of the planetary gear transmission, the outer circumferential ring of the planetary roller transmission and the carrier for supporting the planetary gear of the planetary gear transmission are fixed to the motor housing, and the outer circumferential gear of the planetary gear transmission is connected to the hub.

Accordingly, the rotation speed of the motor rotor is reduced with the planetary roller transmission and transmitted to the planetary gear transmission and then to the hub. Since the planetary roller transmission transmits rotation by friction, it produces less noise and as a result, less noise is produced when the high speed of the rotation of the motor rotor is reduced. Also, since the rotation that has been reduced with the planetary roller is transmitted to the planetary gear transmission, the noise produced with the planetary gear transmission is small, although the noise is produced by meshing of gears in the planetary gear transmission.

The motor drive unit for an electric motor-operated bicycle according to a still further embodiment is based on the motor drive unit for an electric motor-operated bicycle as mentioned above, in which a projecting stopper for engaging with the vehicle body frame is disposed at one end of the motor housing, said end being on the vehicle body frame side; a bearing for supporting the hub is fitted to the place positioned radially outer side than the stopper; and a wiring hole for the wiring of the electric motor to pass through is positioned in the motor housing, radially inner than the bearing.

Accordingly, the space which is formed as a result of providing the stopper for transmitting the reaction forces of the electric motor and the planetary transmission to the vehicle body frame on the motor housing and which is not used otherwise, namely the space which is located radially inner than the hub supporting bearing, can be used for boring the hole for the wiring.

Embodiments of the motor drive unit for the electric motor-operated bicycle of the invention will be hereinafter described in detail in reference to the appended drawings, in which:
FIG. 1 is a cross-sectional view of a motor drive unit for the electric motor-operated bicycle;
FIG. 2 is a side view, showing the size end of the motor of the motor drive unit;
FIG. 3 is a cross-sectional view, along the line III-III, of the planetary roller transmission shown in FIG. 1;
FIG. 4 is a cross-sectional view, along the line IV-IV, of the planetary gear transmission shown in FIG. 1;
FIG. 5 is a view, as seen along the line V-V in FIG. 1, of a base plate on which capacitors are mounted; and
FIG. 6 is a cross-sectional view of another embodiment.

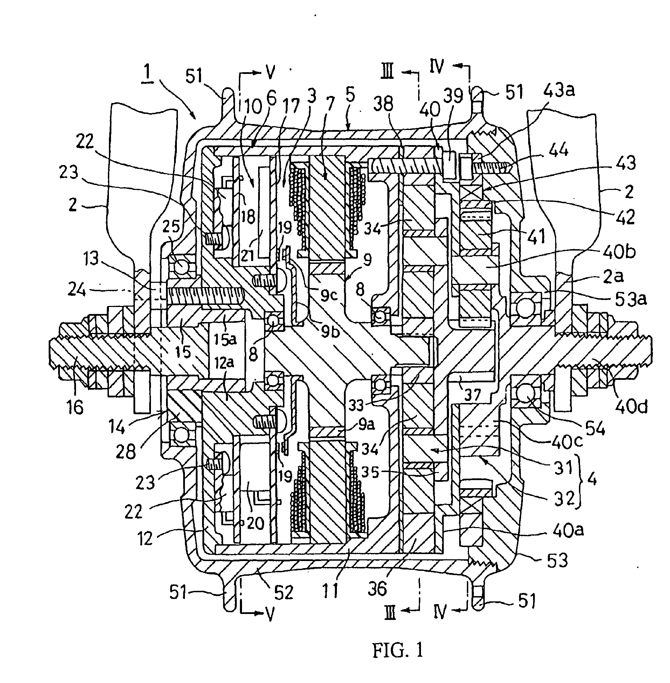

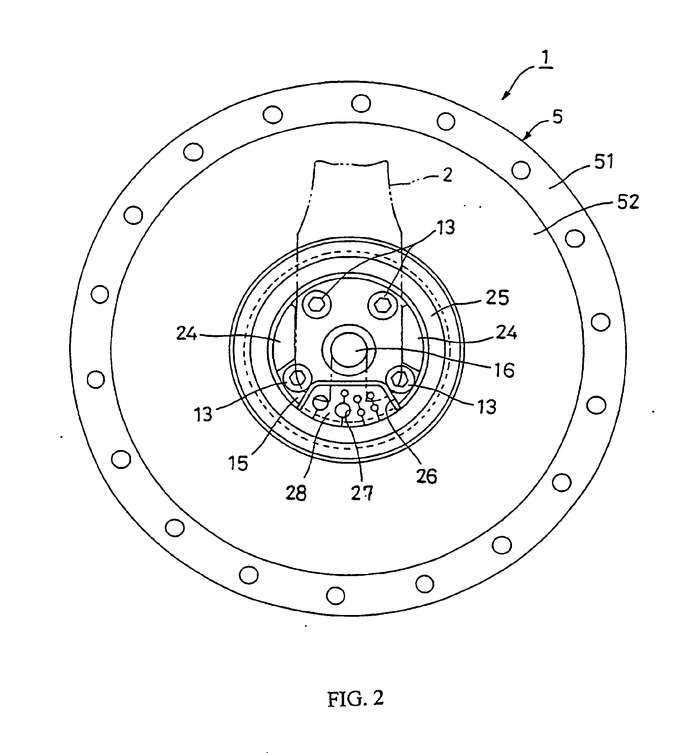

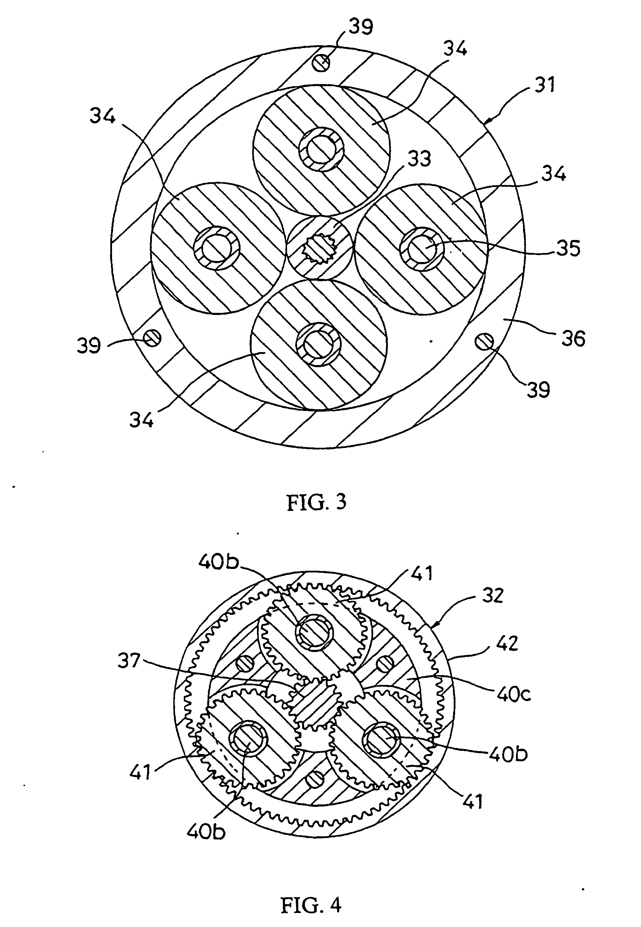

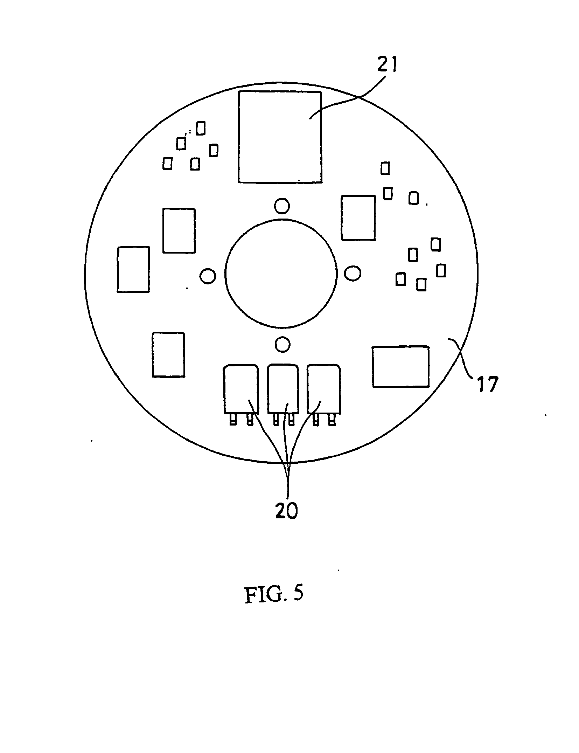

FIG. 1 is a cross-sectional view of a motor drive unit for the electric motor-operated bicycle of the invention. FIG. 2 is a side view, showing the side end of the motor of the motor drive unit. FIG. 3 is a cross-sectional view along the line III-III of a planetary roller transmission shown in FIG. 1. FIG. 4 shows a cross-sectional view along the line IV-IV of a planetary gear transmission shown in FIG. 1. FIG. 5 is a view, as seen along the line V-V in FIG. 1, of a base plate on which capacitors are mounted.

### First Embodiment

In the drawings, the motor drive unit for the electric motor-operated bicycle of the embodiment is provided with the reference numeral 1. The motor drive unit 1 is located in the axial part of the front wheel and attached to the front fork indicated with the reference numeral 2 in FIG. 1. Namely, the motor drive unit 1 is constituted such that a brush-less DC electric motor 3 and a planetary transmission 4 are enclosed in a rotatable hub 5 side by side in the vehicle width direction. Here, the bicycle on which the motor drive unit 1 is mounted is of the conventionally known type in which the rear wheel is propelled through a chain or the like as the pedals (not shown) are depressed.

The electric motor 3 comprises; a motor housing 6, a stator 7 attached to the inside circumferential surface of the motor housing 6, a rotor 9 supported for rotation in the axial part of the motor housing 6 through bearings 8, and a motor controller 10 located in part of the motor housing 6 opposite the output side.

The motor housing 6 comprises; a housing body 11 of a bottomed tubular shape located on the right side in FIG. 1, a cap member 12 covering the open end of the housing body 11, and a connecting member 14 secured with a securing bolt 13 to the outer end surface in the axial part of the cap member 12. The connecting member 14 comprises a disk 15 secured to the cap member 12 and a bolt 16 secured in the axial part of the disk 15. Incidentally, the housing body 11 and the cap member 12 are made of a material having high thermal conductivity such as aluminium alloy to facilitate dissipation of heat generated with the stator 7 and the motor controller 10, while the bolt 16 and the disk 15 of the connecting member 14 are made of steel to provide high rigidity with small sizes.

The cap member 12 has in its axial part an integrally formed tube 12a extending toward the inside of the motor. To the tube 12a are secured two base plates 17, 18 of the motor controller 10, which are spaced in the vehicle width direction. A tube 15a formed integrally with the disk 15 is fitted to the inside circumferential surface of the tube 12a. In this way, fitting the tube 15a to the inside circumferential surface of the tube 12a increases the contact area between the cap member 12 and the disk 15, so that the heat of the cap member 12 is easily transmitted to the disk 15.

Of the base plates 17, 18, the base plate 17 located on the right in FIG. 1 are mounted a - Hall element 19 for detecting a magnet 9c located at the distal end of a detection plate 9b disposed in a position corresponding to a magnetic pole 9a of a rotor 9, capacitors 20 for eliminating switching noise, an IC 21, and other electronic components. To the other base plate 18 is mounted a switching element 22 (FET) of an electronic rectification mechanism of the motor 3.

The capacitors 20 as shown in FIG. 5 are plural in number, of the same capacitance, and arranged to be spaced side by side. Use of the plural number of capacitors 20 in this way makes it possible to use capacitors of a small size and to reduce the dimension of the motor 3 in the axial (vehicle width) direction in comparison with an arrangement in which only a single capacitor is used.

The switching element 22 as a package is brought into tight contact with the cap member 12 by means of screws 23 so that heat is transmitted to the cap member 12. With such a constitution, heat produced when the motor 3 is operated to drive is cooled with the motor housing 6.

The disk 15 of the connecting member 14 (at an end of the motor housing 6 on the vehicle body frame side) is provided with projecting stoppers 24 for preventing the motor housing 6 from being rotated by the reactional forces of the motor 3 and the planetary transmission 4. As shown in FIG. 2, the stoppers 24 are provided at two positions on the disk 15 so that they respectively engage with the front and the rear edges of the front fork 2. A bearing 25 is fitted to the outer circumferential part of the disk 15, namely radially outer than the stopper 24, for supporting one end, in the vehicle width direction, of the hub 15 for rotation.

A hole 26 for the wiring of the motor 3 to pass through is positioned in part of the disk 15 that is radially inner than the bearing 25 and is opposite the lower end of the front fork 2 as seen in side view, FIG. 2. The wiring hole 26 is provided with a support member 28 made of rubber formed with round holes 27 for the motor wiring (not shown) to pass through. With such a constitution in which the motor controller 10 is disposed opposite the output side of the motor 3 and the wiring is led out of the front fork 2 side end of the motor 3, wiring is made without extending from one end to the other in the hub 5 in the vehicle width direction, the wiring does not interfere with other components in the hub, and the motor housing 6 can be made in a small size.

As described above, since the motor controller 10 is disposed in the motor housing 6, the wiring connected to the motor 3 includes only relatively thick, two power supply cables and relatively thin, a plural number of control wires. As a result, the support member 28 fitted in the wiring hole 26 is provided with round holes 27 corresponding to diameters and the number of the cables and the wires.

Incidentally, if a constitution were employed in which the motor controller 10 is disposed outside the motor 3, thick power supply cables between the motor 3 and the controller 10 would have to be provided in the number of the phase of the motor 3. That is to say, employing this embodiment makes it possible to use only two, thick power supply cables led out from the motor 3, and therefore the area through which the cables pass can be reduced, in comparison with the case the motor controller 10 is disposed outside, and wiring work around the motor is facilitated. Along with such advantages as described above, a circuit for distributing power to each phase of the motor 3 need not be provided on the side of a main control unit (not shown) for commanding the motor controller 10 for the output to the motor 3 and therefore, the main control unit can be made in a small size.

In this embodiment, the planetary transmission 4 comprises a planetary roller transmission 31 and a planetary gear transmission 32 interconnected in series in that order in the power transmitting train, so that the number of transmission stages is two. The reasons for disposing the planetary roller transmission 31 on the upstream side in the power transmitting train are described in the next paragraph.

That is, the planetary roller transmission 31 can reduce the noise produced when the high speed rotation of the motor 3 is reduced because it transmits rotation by friction, and therefore, it produces less noise. Another reason is that one of the drawbacks of the planetary roller transmission 31 that it can transmit only a small torque is eliminated by disposing it in part of the power transmitting train where torque is relatively small.

The reason for disposing the planetary gear transmission 32 on the downstream side of the power transmitting train is that its drawback, relatively large noise, can be eliminated as the rotation speed of the rotor 9 is reduced with the planetary roller transmission 31 before being transmitted to the planetary gear transmission 32. Moreover, the planetary gear transmission 32 can transmit a relatively large torque for its small width in the axial direction in comparison with the planetary roller transmission 31 and therefore, it is easier to make the motor drive unit 1 in a smaller size. That is, if a planetary roller transmission were used in place of the planetary gear transmission 32, the width (in the axial direction) of the roller rolling surface must be made greater than the corresponding width of the planetary gear transmission 32 because a large torque must be transmitted. That would result in an undesirable increase in the size of the motor drive unit 1.

The planetary roller transmission 31 is constituted as shown in FIG. 3 with a sun roller 33 connected through serration to the rotor 9 of the motor 3, four planetary rollers 34 in rolling contact with the sun roller 33, a carrier 35 for supporting the planetary rollers 34 for their rotation and revolution, and an outer circumferential ring 36 in rolling contact with the planetary rollers 34.

The carrier 35 as shown in FIG. 1 has in its axial part an integrally formed sun gear 37 of the planetary gear transmission 32. The outer circumferential ring 36 is secured to the outer circumferential part of the housing body 11 of the motor housing 6 using securing bolts 39 through a spacer (spacing member) 38. Incidentally, the securing bolts 39 also secure a planetary gear supporting carrier 40, to be described later, of the planetary gear transmission 32 to the housing body 11.

The planetary gear transmission 32 as shown in FIG. 4 comprises; the sun gear 37 formed on the carrier 35 of the planetary roller transmission 31, three planetary gears 41 meshing with the sun gear 37, the carrier 40 for supporting the planetary gears 41 for their rotation, and an outer circumferential gear 42 meshing with the planetary gears 41.

The carrier 40 comprises; a ring-shaped plate 40a located nearer to the planetary roller transmission 31 than to the planetary gear 41, a carrier body 40c connected to the ring-shaped plate 40a through planetary gear supporting shafts 40b, and a bolt 40d integrally formed with the carrier body 40c. One end, on the planetary roller transmission 31 side, of the carrier 40, namely the outer circumferential part of the ring-shaped plate 40a, is secured to the housing body 11 of the motor housing 6 using the securing bolts 39, while the bolt 40d on the other end is secured to an end bracket 2a located on one branch of the front fork 2.

The outer circumferential gear 42 constitutes an inner ring of a one-way clutch 43 shown in FIG. 1 and is connected through the one-way clutch 43 to the hub 5. The outer ring 43a of the one-way clutch 43 is secured to the hub 5 with securing bolts 44, and constituted to transmit power only from the outer circumferential gear 42 to the hub 5.

The planetary gear transmission 32 and the planetary roller transmission 31 constituted as described above in this embodiment are lubricated with grease (grease for traction drive) for the planetary roller transmission 31.

Since the planetary roller transmission 31 transmits torque by friction, the torque transmitting property is not good if grease for gear transmissions is used. For that reason, when the planetary roller transmission and the planetary gear transmission are disposed within a housing in conventional arrangement, a partition wall and an oil seal are provided between the two transmissions and they are lubricated with respectively dedicated kinds of grease. However, this embodiment is arranged that the grease for the planetary roller transmission 31 is also used to lubricate the planetary gear transmission 32, so that the partition wall and the oil seal are unnecessary. That is, the size of this motor drive unit 1 is reduced by the space for providing the partition wall and the oil seal.

The hub 5 of this embodiment comprises; a hub body 52 of a bottomed tube shape with its outer circumferential part formed with flanges 51 for connecting spokes (not shown), and a cap member 53 screwed on the open end of the hub body 52. The axial part of the hub body 52 is supported for rotation on the disk 15 of the motor housing 6 through the bearing 25. A boss 53a formed in the axial part of the cap member 53 is supported for rotation on the bolt 40d of the planetary gear transmission 32 through a bearing 54. The outer ring 43a of the one-way clutch 43 is secured to the cap member 53 so that power is transmitted from the planetary gear transmission 32. Incidentally, the turning direction, that is, right-hand or left-hand screw, of the thread coupling the hub body 52 and the cap member 53 is adapted so that the screw is tightened when power is transmitted from the planetary gear transmission 32 to the cap member 53.

Forming the hub 5 as described above so that it can be divided into the hub body 52 having flanges 51 for connecting the spokes and the cap member 53 makes it possible to freely choose the order of the work of attaching a rim (not shown) to the hub 5 through the spokes and the work of assembling the motor 3 and the planetary transmission 4 to the hub 5. Moreover, at the time of maintenance, the motor 3 and the planetary transmission 4 can be removed from the front wheel without removing the spokes.

The assembling work of the motor 3 and the planetary transmission 4 is made to the cap member 53 of the hub 5. That is to say, first the one-way clutch 43 is attached to the cap member 53 and then an assembly consisting of the motor 3 and the planetary transmission 4 is attached to the cap member 53 so that the planetary gear 41 of the planetary gear transmission 32 engages with the inner ring (outer circumferential gear 42) of the one-way clutch 43 and that the bolt 40d of the planetary gear transmission 32 fits into the bearing 54 on the cap member 53 side. In this way, after attaching all the members in the hub 5 to the cap member 53, the motor 3 is inserted into the opening of the hub body 52, so that the disk 15 of the motor housing 5 fits into the bearing 25 on the hub body 52 side and that the cap member 53 is screwed on the hub body 52. The assembling work of the motor drive unit 1 is thus completed when the cap member 53 is screwed on the hub body 52.

The assembled motor drive unit 5 is made ready for running when the bolt 16 of the motor housing 6 and the bolt 40d of the carrier 40 of the planetary gear transmission 32 are respectively secured to the end brackets 2a of the front fork 2. Incidentally, if human power detecting means is provided in the middle of the human power drive train and the power of the motor 3 is increased or decreased with a main control unit in proportion to the magnitude of the human power, the vehicle can be driven by both the power of the motor 3 and the human power. When the power of the motor 3 is controlled independent of the human power, it is possible to run with only the power of the motor 3.

When the vehicle is propelled by the motor power, the rotation of the rotor 9 of the motor 3 is reduced through the power transmitting train consisting in the order of; the sun roller 33 of the planetary roller transmission 31, the planetary rollers 34, and the carrier 35, and transmitted to the sun gear 37 of the planetary gear transmission 32. The rotation is further reduced through the power transmitting train consisting in the order of; the sun gear 37, the planetary gear 41, and the outer circumferential gear 42 (one-way clutch 43) and transmitted to the hub 5.

In the motor drive unit 5 constituted as described above, the support of the motor 3, the planetary transmission 4, and the hub 5 on the front fork 2 is effected with an assembly made by combining together the motor housing 6, the outer ring 36 of the planetary roller transmission 31, and the carrier 40 of the planetary gear transmission 32. In other words, in the motor drive unit 1, the above-mentioned assembly constitutes the wheel shaft.

Since the motor drive unit can support the motor 3, the planetary transmission 4, and the hub 5 without using a single shaft passing through the motor 3 and the planetary transmission 4 in the vehicle width direction, components located in the axial part of the motor 3 and the planetary transmission 4 (the rotor 9, the sun roller 33 and the sun gear 37) can be formed with dimensions that are necessary and enough for transmitting the output of the motor 3. Therefore, the motor drive unit 1 can be manufactured with a radially small size.

Since the sun roller 33 and the sun gear 37 to which the rotation is transmitted from the rotor 9 of the motor 3 can be made in small diameters, the speed reduction ratio of the planetary roller transmission 31 and the planetary gear transmission 32 can be increased. As a result, a motor of a high speed, small torque type, namely a small-sized motor can be used as the motor 3.

Furthermore, in this embodiment, the housing body 11 and the cap member 12 of the motor housing 6 constituting part of the wheel shaft can be shaped to have high strengths. Therefore, the housing body 11 and the cap member 12 are made of aluminium to reduce weight without sacrificing the rigidity of the wheel shaft.

### Second Embodiment

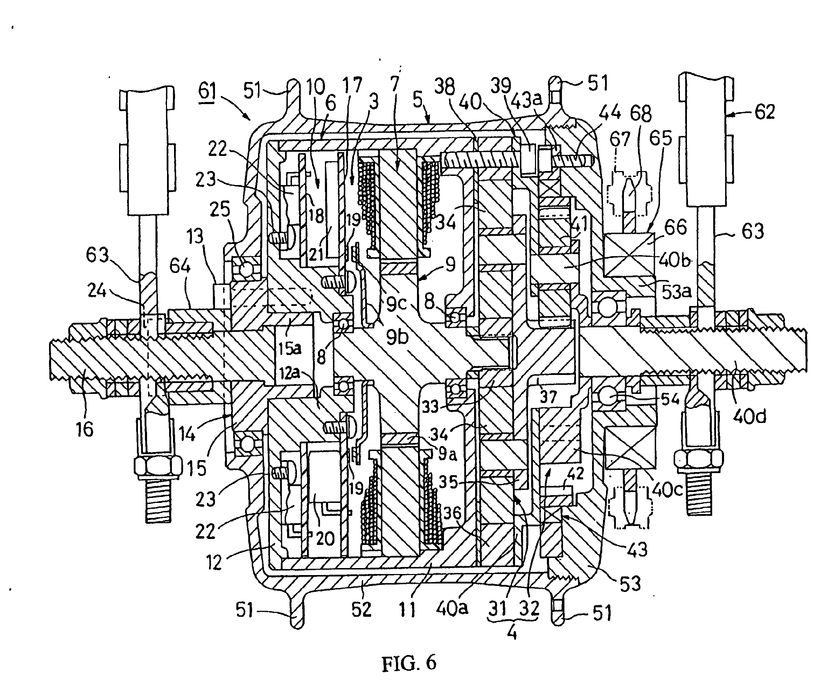

The motor drive unit for the electric motor- operated bicycle of this invention may employ a constitution to be disposed in the axial part of the rear wheel. Such an embodiment will be described in detail in reference to FIG. 6.

FIG. 6 is a cross-sectional view of such an embodiment. In FIG. 6, components that are the same as or equivalent to those explained in reference to FIGs. 1 to 4 are provided with the same or equivalent reference numerals, and detailed explanations are therefore omitted.

The motor drive unit 61 shown in FIG. 6 is constituted by partially modifying the front wheel motor drive unit used in the first embodiment. Two points are modified as described below.

The first point of modification is part of the unit where the unit is attached to the vehicle body frame 62. That is, since the distance between two end brackets 63 for supporting the rear wheel of the bicycle is greater than that between the end brackets 2a of the front fork 2, the bolt 16 of the connecting member 14 of the motor housing 6 and the bolt 40d of the carrier 40 of the planetary gear transmission 32 are made longer and thicker than those for the front wheel so as to be secured to the end brackets 63 of the vehicle body frame 62. The stoppers 24 for transmitting the reactional force of the motor 3 are made integrally with a shaft member 64 secured to the disk 15 of the motor housing 6 so as to engage with the end bracket 63 on the left in FIG. 6.

The second point of modification is the cap member 53 of the hub 5. That is, the boss 53a of the cap member 53 for fitting the bearing 54 is made longer than that for the front wheel so that the pedal depressing force (human power) can be transmitted to the hub 5, and a free wheel 65 is attached to the outer circumferential part of the boss 53a. The free wheel 65 is constituted with a one-way clutch 66 and a rear sprocket 68 for routing a chain 67. The one-way clutch 66 is constituted such that power is transmitted only from the rear sprocket 68 to the cap member 53. The chain 67 is routed to make connection between the rear sprocket 68 and a front sprocket (not shown) located on the side of the pedal crankshaft.

The motor drive unit 61 constituted as described above can also achieve the same effect as with the first embodiment.

The motor drive unit 1 for the front wheel can be modified into the motor drive unit 61 for the rear wheel simply by replacing the connecting member 14, the bolt 40d, and the cap member 53 of the hub 5 of the motor drive unit 1. Therefore, almost all of the other components can be used for both front and rear wheels. Therefore, two types of motor drive units respectively for the front and rear wheels can be manufactured while reducing costs.

While the planetary transmission 4 of the above embodiments is described as being constituted with the planetary roller transmission 31 and the planetary gear transmission 32, the planetary transmission 4 may also be constituted with only the planetary roller transmission 31. In that case, the carrier 35 of the planetary roller transmission 31 is secured to the motor housing 6, and the outer circumferential ring 36 is connected to the hub 5 through the one-way clutch 42.

With the **embodiments** described above, the motor, the planetary transmission, and the hub can be supported without using a single shaft extending in the vehicle width direction to pass through the motor and the planetary transmission, and therefore, the components located in the axial part of the motor and the planetary transmission can be formed with dimensions that are necessary and enough for transmitting the output of the motor.

Therefore, it is possible to provide a motor drive unit in which the motor and the planetary transmission are both made in a small size and a light weight for electric motor-operated bicycles.

Since the diameter of the sun member of the planetary transmission to which rotation is transmitted from the rotor of the motor can be reduced, a great speed reduction ratio can be chosen for the planetary transmission without increasing the external shape. As a result, a motor of a high speed, small torque type, namely a small-sized motor can be used. This also helps reduce the size of the motor drive unit.

Since the motor housing constituting part of the wheel shaft can be shaped to have a high strength, the motor housing can be made of aluminium alloy for example. With such a constitution, weight of the wheel shaft can be reduced without sacrificing the rigidity of the wheel shaft. This further helps reduce the weight of the motor drive unit.

According to another embodiment, the motor rotor can be made in smaller diameter and weight in comparison with the constitution in which the wheel shaft passes through the axial part of the motor.

As a result, it is possible not only to form the motor housing in a small diameter, but also the strenght for supporting the rotor can be reduced. This in turn makes it possible to form the motor housing with a reduced wall thickness and to provide a motor drive unit that is further reduced in size and weight.

In a further embodiment, the rotation speed of the motor rotor is reduced with the planetary roller transmission and transmitted to the planetary gear transmission and then to the hub. Since the planetary roller transmission transmits rotation by friction, it produces less noise and as a result, less noise is produced when the high speed of the rotation of the motor rotor is reduced. Also, since the rotation that has been reduced with the planetary roller is transmitted to the planetary gear transmission, the noise produced with the planetary gear transmission is small, although the noise is produced by meshing of gears in the planetary gear transmission.

Therefore, it is possible to provide a motor drive unit for electric motor-operated bicycles that produces less noise.

According to a still further embodiment, the space which is formed as a result of providing the stopper for transmitting the reactional forces of the electric motor and the planetary transmission to the vehicle body frame on the motor housing and which is not used otherwise, namely the space which is located radially inner than the hub supporting bearing, can be used for boring the hole for the wiring.

As a result, it is possible to pass the relatively thick cables for the motor power supply and the relatively thin, a large number of wires for the motor control through the motor housing.

## Claims

1. A motor drive unit (1;61) for an electric motor-operated vehicle, in particular bicycle, having an electric motor (3) with a motor housing (6) and a rotor (9) and a stator (7) and a planetary transmission (4) which are disposed inside a hub (5), said hub (5) is supported by a bearing (25) for rotation on the same axial line by a wheel shaft of a wheel, wherein the electric motor (3) is disposed on one vehicle width direction end of the inside of the hub (5), the planetary transmission (4) is disposed on the other end and the rotor (9) of the electric motor (3) is coupled to a sun member (33 - 37) of the planetary transmission (4), the sun member (33 - 37) is associated with a planetary member (41) moving an outer circumferential member (42) for rotating the hub (5), a carrier (40) for supporting said planetary member (41) of the planetary transmission (4) is connected with the wheel shaft, an one-way clutch (43) is secured to the hub (5) and the outer circumferential member (42), the hub (5) comprises a hub body (52) having an open end at the planetary transmission side and a cap member (53) disposed at said open end, **characterized in that** said carrier (40) of the planetary transmission (4) is fixed to said motor housing (6) to constitute an assembly unit having a pair of opposing bolts (16, 40d) to constitute the wheel shaft, and a stopper (24) for engaging with a vehicle body frame (62) is disposed at one end of the motor housing (6), said end being on the vehicle body frame side opposite from the planetary transmission (4); said bearing (25) for supporting the hub (5) is fitted to the place positioned radially outside of the stopper (24); and a wiring hole (26) for the wiring of the electric motor (3) to pass through is positioned in the motor housing (6) radially inside the bearing (25) and radially outside of the wheel shaft, the cap member (53) is detachable secured to the hub body (52), and the one-way clutch (43) is secured to said cap member (53).

2. Motor drive unit according to claim 1, **characterized in that** the electric motor (3) is a brush-less dc motor with its rotor (9) located in the axial center of a stator (7); the stator (7) is fixed to the inner circumferential surface of a motor housing (6); and the rotor (9) is supported for rotation on the motor housing (6).

3. Motor drive unit according to claim 1 or 2, **characterized in that** said electric motor (3) is of a high revolution type with a small torque.

4. Motor drive unit according to at least one of the preceding claims 1 to 3, **characterized in that** the motor housing (6) is made of aluminium alloy.

5. Motor drive unit according to at least one of the preceding claims 1 to 4, **characterized in that** a motor controller (10) is provided in a part of the motor housing (6).

6. Motor drive unit according to at least one of the preceding claims 1 to 5, **characterized in that** the planetary transmission (4) being constituted with a planetary roller transmission (31), a carrier (35) of which being secured to a sun gear (37) and an outer circumferential ring (36) of which being fixed to a motor housing (6).

7. Motor drive unit according to at least one of the preceding claims 1 to 6, **characterized in that** the planetary transmission (4) comprises a planetary roller transmission (31) and a planetary gear transmission (32) disposed side by side in the vehicle width direction; a sun roller (33) of the planetary roller transmission (31) is connected to the rotor (9) of the electric motor (3), a carrier (35) for supporting a planetary roller (34) is connected to a sun gear (37) of the planetary gear transmission (32); an outer circumferential ring (36) of the planetary roller transmission (31) and the carrier (35) for supporting the planetary gear (41) of the planetary gear transmission (32) are fixed to a motor housing (6); and that the outer circumferential gear (42) of the planetary gear transmission (32) is connected to the hub (5).

8. Motor drive unit according to at least one of the preceding claims 1 to 7, **characterized in that** said drive unit being a drive unit for a front wheel or for a rear wheel of a bicycle.

## Patentansprüche

1. Eine Motorantriebseinheit (1; 61) für ein elektromotorbetätigtes Fahrzeug, insbesondere Fahrrad, die einen Elektromotor (3) mit einem Motorgehäuse (6) und einem Rotor (9) und einem Stator (7) und einem Planetengetriebe (4) aufweist, die innerhalb einer Nabe (5) angeordnet sind, wobei die Nabe (5) durch ein Lager (25) zur Rotation auf derselben axialen Linie durch eine Radwelle eines Rades gelagert ist, wobei der Elektromotor (3) an einem Ende der Innenseite der Nabe (5) in Richtung der Breite des Fahrzeuges angeordnet ist, das Planetengetriebe (4) am anderen Ende angeordnet ist und der Rotor (9) des Elektromotors (3) mit einem Sonnenteil (33 - 37) des Planetengetriebes (4) gekuppelt ist, wobei das Sonnenteil (33 - 37) mit einem Planetenteil (41) verbunden ist, das ein äußeres Umfangsteil (42) zum Rotieren der Nabe (5) bewegt, ein Träger (40) zur Lagerung des Planetenteiles (41) des Planetengetriebes (4) mit der Radwelle verbunden ist, eine Freilaufkupplung (43) an der Nabe (5) und dem äußeren Umfangsteil (42) befestigt ist, die Nabe (5) einen Nabenkörper (42) aufweist, der ein offenes Ende an der Planetengetriebeseite und ein Kappenteil (53), angeordnet an dem offenen Ende, aufweist, **dadurch gekennzeichnet, dass** der Träger (40) des Planetengetriebes (4) an dem Motorgehäuse (6) befestigt ist, um eine Montageeinheit zu bilden, die ein Paar gegenüberliegender Schrauben (16, 40d) aufweist, um die Radwelle zu bilden, und einen Anschlag (24) zum Eingriff mit einem Fahrzeugkarosserierahmen (62), der an einem Ende des Motorgehäuse (6) angeordnet ist, wobei das Ende an der Seite des Fahrzeugkarosserierahmens ist, gegenüberliegend zu dem Planetenradgetriebe (4); wobei das Lager (25) zum Lagern der Nabe (5) an dem Ort eingesetzt ist, der radial außerhalb des Anschlages (24) positioniert ist; und eine Verdrahtungsbohrung (26) in dem Motorgehäuse (6) radial innerhalb des Lagers (25) und radial außerhalb der Radwelle angeordnet ist, zum Hindurchführen der Verdrahtung des Elektromotors (3), wobei das Kappenteil (53) lösbar an dem Nabenkörper (52) befestigt ist und die Freilaufkupplung (43) an dem Kappenteil (53) befestigt ist.

2. Motorantriebseinheit nach Anspruch 1, **dadurch gekennzeichnet, dass** der Elektromotor (3) ein bürstenloser Gleichstrommotor ist mit seinem Rotor (9) angeordnet in der axialen Mitte eines Stators (7); wobei der Stator (7) an der inneren Umfangsoberfläche eines Motorgehäuses (6) befestigt ist; und der Rotor (9) zur Rotation an dem Motorgehäuse (6) gelagert ist.

3. Motorantriebseinheit nach Anspruch 1 oder 2, **dadurch gekennzeichnet, dass** der Elektromotor (3) von einem Hochdrehzahl-Typ mit kleinem Drehmoment ist.

4. Motorantriebseinheit nach zumindest einem der vorhergehenden Ansprüche 1 bis 3, **dadurch gekennzeichnet, dass** das Motorgehäuse (6) aus Aluminiumlegierung besteht.

5. Motorantriebseinheit nach zumindest einem der vorhergehenden Ansprüche 1 bis 4, **dadurch gekennzeichnet, dass** eine Motorsteuerung (10) in einem Teil des Motorgehäuses (6) vorgesehen ist.

6. Motorantriebseinheit nach zumindest einem der vorhergehenden Ansprüche 1 bis 5, **dadurch gekennzeichnet, dass** das Planetengetriebe (4) mit einem Planetenwalzengetriebe gebildet ist, dessen Träger (35) an einen Sonnenrad (37) befestigt ist und dessen äußerer Umfangsring (36) an einem Motorgehäuse (6) befestigt ist.

7. Motorantriebseinheit nach zumindest einem der vorhergehenden Ansprüche 1 bis 6, **dadurch gekennzeichnet, dass** das Planetengetriebe (4) ein Planetenwalzengetriebe (31) und ein Planetenradgetriebe (32) aufweist, die in Richtung der Fahrzeugbreite nebeneinander angeordnet sind; eine Sonnenwalze (33) des Planetenwalzengetriebes (31) mit dem Rotor (9) des Elektromotors (3) verbunden ist, ein Träger (35) zum Lagern einer Planetenwalze (34) mit einem Sonnenrad (37) des Planetenradgetriebes (32) verbunden ist; ein äußerer Umfangsring (36) des Planetenwalzengetriebes (31) und der Träger (35) zum Lagern des Planetenrades (41) des Planetenradgetriebes (32) an einem Motorgehäuse (6) befestigt sind, und dass das äußere Umfangsritzel (42) des Planetenradgetriebes (32) mit der Nabe (5) verbunden ist.

8. Motorantriebseinheit nach zumindest einem der vorhergehenden Ansprüche 1 bis 7, **dadurch gekennzeichnet, dass** die Antriebseinheit eine Antriebseinheit für ein Vorderrad oder für ein Hinterrad eines Fahrrades ist.

## Revendications

1. Unité de propulsion à moteur (1 ; 61), pour un véhicule propulsé par moteur électrique, en particulier une bicyclette, comprenant un moteur électrique (3), avec un boîtier de moteur (6) et un rotor (9) et un stator (7), et une transmission planétaire (4), disposés à l'intérieur d'un moyeu (5), ledit moyeu (5) étant supporté par un palier (25) pour tourner sur le même axe, par un arbre de roue d'une roue, dans laquelle le moteur électrique (3) est disposé sur une extrémité, dans la direction de la largeur du véhicule, de l'intérieur du moyeu (5), la transmission planétaire (4) est disposée sur l'autre extrémité et le rotor (9) du moteur électrique (3) est couplé à un organe solaire (33 à 37) de la transmission planétaire (4), l'organe solaire (33 à 37) est associé à un organe planétaire (41) déplaçant un organe circonférentiel extérieur (42) pour faire tourner le moyeu (5), un porte-satellite (40), pour supporter ledit organe planétaire (41) de la transmission planétaire (4), est connecté à l'arbre de roue, un embrayage unidirectionnel (43) est fixé au moyeu (5) et à l'organe circonférentiel extérieur (42), le moyeu (5) comprend un corps de moyeu (52) ayant une extrémité ouverte sur le côté transmission planétaire, et un organe formant couvercle (53), disposé à ladite extrémité ouverte, **caractérisée en ce que** ledit porte-satellite (40) de la transmission planétaire (4) est fixé audit boîtier de moteur (6), de manière à constituer un ensemble unitaire comprenant une paire de boulons (16, 40d) opposés, pour constituer l'arbre de roue, et une butée (34), pour venir en prise avec un cadre de carrosserie de véhicule (62), est disposée à une extrémité du boîtier de moteur (6), ladite extrémité étant située sur le côté de cadre de carrosserie de véhicule opposé à la transmission planétaire (4) ; ledit palier (25) pour supporter le moyeu (5) est monté sur l'emplacement positionné radialement à l'extérieur de la butée (24) ; et un trou de câblage (26), pour permettre le passage à travers lui du câblage du moteur électrique (3), est positionné dans le boîtier de moteur (6), radialement à l'intérieur du palier (25) et radialement à l'extérieur de l'arbre de roue, l'organe formant couvercle (53) est fixé de manière détachable au corps de moyeu (52), et l'embrayage unidirectionnel (43) est fixé audit organe formant couvercle (53).

2. Unité de propulsion à moteur selon la revendication 1, **caractérisée en ce que** le moteur électrique (3) est un moteur à courant continu sans balais, dont le rotor (9) est placé au centre axial d'un stator (7) ; le stator (7) est fixé sur la surface circonférentielle intérieure d'un boîtier de moteur (6) ; et le rotor (9) est supporté en rotation sur le boîtier de moteur (6).

3. Unité de propulsion à moteur selon la revendication 1 ou 2, **caractérisée en ce que** ledit moteur électrique (3) est du type à vitesse de rotation élevée et faible couple.

4. Unité de propulsion à moteur selon au moins l'une des revendications 1 à 3 précédentes, **caractérisée en ce que** le boîtier moteur (6) est formé en alliage d'aluminium.

5. Unité de propulsion à moteur selon au moins l'une des revendications 1 à 4 précédentes, **caractérisée en ce qu'**un contrôleur moteur (10) est prévu dans une partie du boîtier de moteur (6).

6. Unité de propulsion à moteur selon au moins l'une des revendications 1 à 5 précédentes, **caractérisée en ce que** la transmission planétaire (4) est constituée d'une transmission planétaire à rouleaux (31), dont un porte-satellite (35) est fixé sur une roue dentée solaire (37) et dont une couronne circonférentielle extérieure (36) est fixée à un boîtier de moteur (6).

7. Unité de propulsion à moteur selon au moins l'une des revendications 1 à 6 précédentes, **caractérisée en ce que** la transmission planétaire (4) comprend une transmission planétaire à rouleaux (31) et une transmission planétaire à roues dentées (32), disposées côté à côte dans la direction de la largeur du véhicule ; un rouleau solaire (33) de la transmission planétaire à rouleaux (31) est relié au rotor (9) du moteur électrique (3), un porte-satellite (35), pour supporter un rouleau planétaire (34), est relié à une roue dentée solaire (37) de la transmission planétaire à roues dentées (32) ; une couronne circonférentielle (36) de la transmission planétaire à rouleaux (31), et le porte-satellite (35) pour supporter la roue dentée planétaire (41) de la transmission planétaire à roues dentées (32), sont fixés à un boîtier de moteur (6) ; et **en ce que** la couronne circonférentielle extérieure (42) de la transmission planétaire à roues dentées (32) est reliée au moyeu (5).

8. Unité de propulsion à moteur selon au moins l'une des revendications 1 à 7 précédentes, **caractérisée en ce que** ladite unité de propulsion est une unité de propulsion pour une roue avant ou pour une roue arrière d'une bicyclette.
